# EUROPEAN PATENT SPECIFICATION

(11) **EP 1 559 316 B1**
(45) Date of publication and mention of the grant of the patent: **14.03.2007**
(21) Application number: 05250316.6
(22) Date of filing: 21.01.2005
(51) Int. Cl.: A01K 1/12

(54) **Improved milking parlour**
Verbesserter Melkstand
Salle de traite améliorée

(30) Priority: 31.01.2004 GB 0402211
(43) Date of publication of application: 03.08.2005
(73) Proprietor: R.J. FULLWOOD & BLAND LIMITED, Ellesmere, Shropshire SY12 9DF (GB)
(72) Inventor: Lancaster, Richard John, Shrewsbury Shropshire SY4 3AN (GB)
(74) Representative: Nash, Keith Wilfrid

(56) References cited:
- EP-A- 1 266 566
- WO-A-99/31970
- WO-A-03/096802
- GB-A- 2 016 888
- US-B1- 6 205 949

## Description

### Field of invention

This invention concerns milking parlour installations and in particular an improved form of construction by which milk, wash liquid and air are conveyed around such installations.

### Background to the invention

The equipment for milking a cow traditionally comprises a stall to hold the animal, a milking pipeline and a pipeline to transport sanitising solution or washing liquid to the milking equipment.

Typically a number of stalls are arranged adjacent to each other and the pipelines serve all of the stalls.

It is necessary for each stall to be constructed in such a way as to restrain the animal in a position which allows the operator to have safe access to the udder to attach a milking machine thereto. The restraint must be such that, the animal can to a limited extent move, but must not be able to move sufficiently to cause the milking machine to become detached or strained. The stall usually incorporates one or more fixed rails against which the animal will often lean with its buttocks in contact therewith. As a consequence these rails are typically referred to as rump rails, and in view of the tendency for the animal to lean or press against them they have to be structurally strong and are commonly of tubular or box-section steel.

The milking pipeline usually serves at least two purposes. Firstly it connects to a source of vacuum to draw milk expressed from the teats of the animal being milked. Secondly it serves to transport the milk away from the milking machine and animal, to a milk collecting vessel.

It is also necessary periodically to wash and sanitise the internal surfaces of the milking machine. To this end a wash pipeline is provided which supplies washing and/or sanitising liquid to a wash jetter device at each stall. The wash pipeline must, by necessity, run in such a way as to permit attachment of a milking machine to the wash jetter device provided for each stall.

Traditionally, both milking and wash pipeline structures are separate from the remainder of the stall structures and are carried by frameworks which may be attached to the rump rails or extend from the walls or floor or ceiling of the parlour building.

It is an object of the present invention to provide an improved form of milking parlour construction which reduces some of the structural complexity of a milking parlour.

### Summary of the invention

According to the present invention, a milking parlour comprises a plurality of stalls for restraining respective animals, the stalls comprising at least one continuous hollow rump rail, which extends across the rear of the stalls and serves as a conveyance for milk from the stalls, when the parlour is in use.

Typically in a milking parlour embodying the invention, a plurality of separate hollow rump rails are provided, which serve in use to carry milk from the stalls, and also convey air under pressure and/or washing liquid to the stalls, and/or provide a vacuum line.

Where one of the rump rails comprises a vacuum line the vacuum may be a pulsating vacuum.

The internal cross-section of the hollow rail (or all of a number of hollow rails where more than one rail is involved) may be divided into at least two segments by means of at least one internal dividing wall running the length of the interior of the rail, to provide two separate fluid paths along the rail.

Alternatively at least two pipes can extend internally along the length of the hollow rail (or some or all of a number of rails where more than one rail is involved), so as to allow one rail to accommodate at least two of the services.

Where the rump rails or the pipes running therein are carrying milk and/or cleaning fluids, the pipes or at least the inner surfaces thereof may be constructed of a food grade material.

A combination of such arrangements may be incorporated in that a rail may contain one or more separate pipes and at least one internal division along its length, the internally extending divisions and pipes conveying in use, at least some of the fluid services to or from the stalls. In that event each of the fluid connections are provided at spaced apart points along the rail either communicates with an appropriate segment of the rail cross-section or with a pipe running internally the length of the rail, to provide for the collection or delivery of fluids and/or to provide a source of vacuum for the stalls.

In a hybrid arrangement embodying the invention in which the stalls are services with milk collection, air, wash and vacuum delivery lines, and in which at least one rump rail extends across the rear of each of the stalls, the or each rump rail is hollow and incorporates or comprises fluid conveying means for conveying the milk away from the stalls, and/or for conveying at least one of air, wash and vacuum to the stalls, and the other services are conveyed to or from the stalls in a conventional manner.

The hollow rails may be tubular, and may be constructed from stainless steel or a food grade plastics material.

Alternatively the hollow rails may be sleeved internally with stainless steel or a non-corrosive food grade plastics material.

In one embodiment of the invention in a milking parlour in which at least one continuous and hollow rump rail extends across the rear of each of a line of milking stalls, first connection means is provided between one end of the rail to a source of washing and/or sanitising liquid such that the liquid can be pumped into the hollow interior of the rail, and wash jetting means is provided at a plurality of spaced apart positions along the length of the rail each convenient for at last one of the milking stalls with a fluid connection between the hollow interior of the rail and wash jetting means, whereby washing/sanitising liquid can be delivered thereto as required for washing and/or sanitising milking apparatus attached thereto.

In another embodiment of the invention in a milking parlour in which a continuous hollow rump rail extends across the rear of each of a line of milking stalls, connection means is provided between one end of the hollow rump rail and a milk collecting vessel which itself is connected to a vacuum source, and fluid connections are provided at a plurality of spaced apart positions along the length of the said rail each convenient for at least one of the milking stalls, to which in use a flexible pipe leading to a milking machine cluster is connected, whereby in use milk withdrawn from the teats of an animal to which the cluster has been attached can be conveyed along the hollow interior of the rail for collection in the milk collecting vessel at the said one end of the said other rail.

In another embodiment of the invention in a milking parlour in which a hollow rump rail extends across the rear of each of a line of milking stalls, connection means is provided between one end of the rail and a source of vacuum to form a vacuum line, and a vacuum connection is provided at at least one position therealong convenient for at least one of the milking stalls, or a defined region within the parlour, to which a pipe can be connected for connecting the vacuum line to an item of equipment within, or associated with, the milking parlour or one or more of the milking stalls therein.

Where equipment to be connected to the vacuum line requires a pulsating vacuum, the vacuum source may itself be operated in a manner to create a pulsating vacuum in the line, or a pulsator device (known per se) may be incorporated in or at the vacuum connection or in or at some or all of each of a plurality of vacuum connections located at spaced apart points along the vacuum line rail, or may be incorporated in the pipe leading from a vacuum connection to the item of equipment concerned, or may be incorporated into the item of equipment such as a milking machine cluster.

Thus where a pulsating vacuum is required to be supplied to a milking machine cluster to periodically massage and thereby sustain blood circulation within the teats, this is normally provided to the milking machine cluster by way of a further flexible pipeline between the cluster and a vacuum line, separate from the flexible pipe conveying milk from the cluster to the milk collection line. The vacuum line rail may deliver a pulsating vacuum to each vacuum outlet therealong, or an individual pulsator is provided for each vacuum outlet and the line is maintained at a constant vacuum, each pulsator being mounted in or on the rail, or in the flexible pipeline between the vacuum outlet on the rail and the cluster, or in the cluster.

The item of equipment requiring vacuum is typically a milking machine cluster, and typically a first flexible pipe connects the cluster to the milk collection line and a second flexible pipe connects the cluster to a connection to the vacuum line.

Where a pulsating vacuum is required for the cluster, an individual pulsator may be provided for each vacuum connection and the line is maintained at a constant vacuum. Each such pulsator may be mounted in or on the rail or in a flexible pipeline between the vacuum connection on the rail and the cluster, or in the cluster.

Where clean air is also required for supply to the pulsators, a separate hollow continuous rump rail may be employed to supply filtered clean air to outlet connections at appropriate points along the rail, to allow clean air to be drawn off as required.

According to a further aspect of the invention in a milking parlour as aforesaid sufficient continuous hollow rump rails are provided across the rear of the stalls to accommodate all the fluid and vacuum services paths required to enable the parlour to operate. Thus a separate hollow rump rail may be provided for each separate fluid (air, milk or washing liquid), vacuum and pulsating vacuum services path.

Alternatively the internal cross-section of at least one hollow rail may be divided into two or more segments by means of at least one internal dividing wall running the length of the interior of the rail, or may accommodate two or more pipes which run the length of the rail, so as to allow one rail to accommodate two or more of the services. Where only one rump rail is to be provided, the single hollow rump rail may provide all the services to the stalls, wherein the rail is internally divided or contains an appropriate plurality of separate pipes one for each of the services, or a combination of separate divisions and internal pipes may be employed, and fluid or vacuum connections are provided at spaced apart points along the rail either to the appropriate segment of the rail cross-section, or to a pipe running the length of the rail.

The invention enables hollow stall rump rails to incorporate or comprise milk, air, wash and vacuum lines which traditionally have always been installed as a separate item from the stalls and rump rails and have been installed as part of the milking equipment.

Where all the services are conveyed along the interior of one or more of a plurality of rump rails, all the usually high level service pipes normally associated with a milking parlour can be dispensed with, thereby enhancing the interior of the parlour.

The invention can also reduce the cost of the overall installation by reducing the pipework redundancy implicit in conventional designs particularly where hollow pipes have been employed as rump rails, but have served no other purpose.

The essence of the invention is to combine the functions of the stalling and the milking equipment. Since milking parlours were originated many years ago it has been standard practice to keep these two elements of the parlour apart. There have been numerous developments in the design and construction of each element but they have always been kept separate. Historically the stalling has confined the animal while she is being milked and the milking equipment installation extracted the milk and cleaned and sanitised the pipework and delivered vacuum and air as required to effect the milking. The invention seeks to provide a more efficient design and enhanced interior to a milking parlour by combining these functions.

The invention will now be described by way of example with reference to the accompanying drawings in which
Fig 1 shows a conventional milking parlour stall services arrangement.
Fig 2 shows a conventional arrangement with the cluster attached to a wash jetter device for washing and sanitising the teat cups and milk line,
Fig 3 shows how the milk lines and wash lines can be accommodated in the upper and lower of two rump rails,

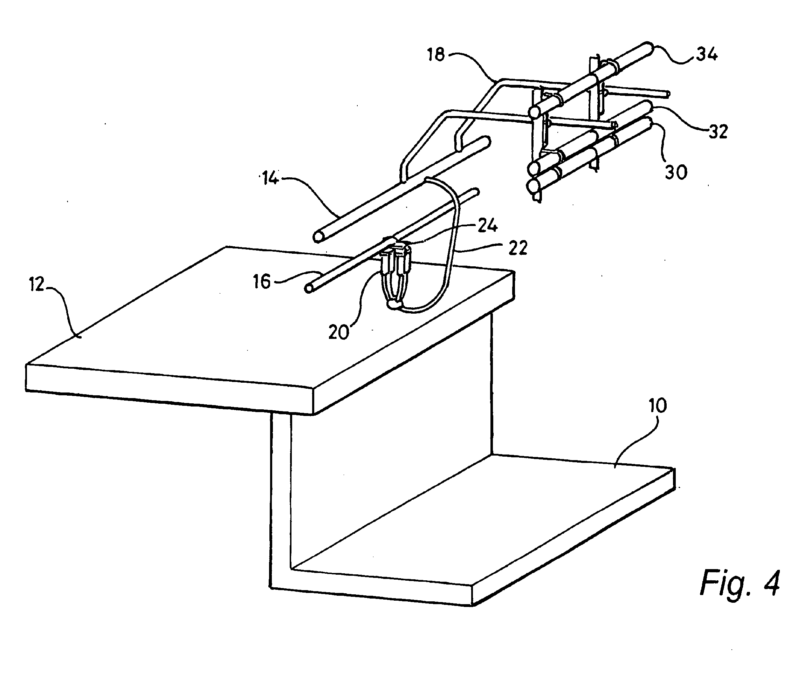

Fig 4 shows the cluster attached to a wash jetter device provided on the lower rump rail and wash line of Fig 2,

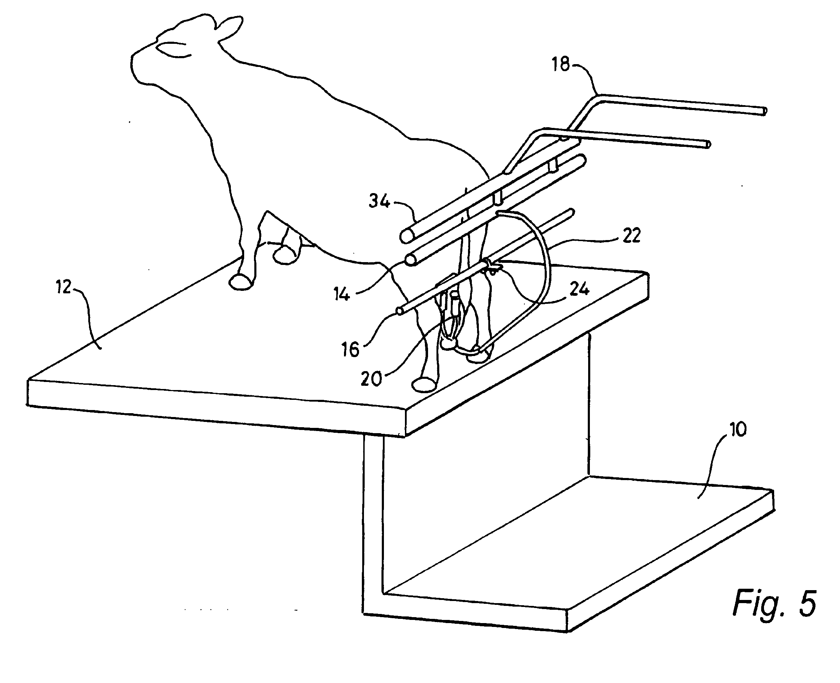

Fig 5 shows a further embodiment of the invention in which further a rump rail is provided and serves as a vacuum line,
Fig 6 shows the embodiment of Fig 5 in wash mode,
Fig 7 illustrates some of the milking parlour equipment to which the milk, wash, air and vacuum lines of Figs 1-6 are connected, and
Fig 8 illustrates how a hollow rump rail can be adapted to convey two or more different fluids.

In the drawings the same reference numerals have been employed to denote common parts in the different figures. Thus the following items are identified as set out below:-
10 Operator standing level
12 Cow standing level
14 Rump rail
16 Secondary rump rail
18 Structural item (bridge arm)
20 Cluster Unit
22 Milk Tube
24 Wash station (Jetter plate)
26 Conventional Milk line
28 Conventional Wash line
30 Conventional Clean air line
32 Conventional Vacuum line for supplying pulsators or itself supplying vacuum pulses
34 Conventional Vacuum line
36 Clean Air Line Filter
38 Vacuum Distribution Tank
40 Vacuum Pump Unit
42 Water Tank
44 Bulk Milk Storage Tank)
46 Milk Collecting Vessel
48 Milk Pump

In more detail:-

The surface along which the operator walks and on which he stands to position clusters on, and remove clusters from, the teats of the cows to be milked, is shown at 10, while the platform on which the cows stand to be milked is denoted at 12.

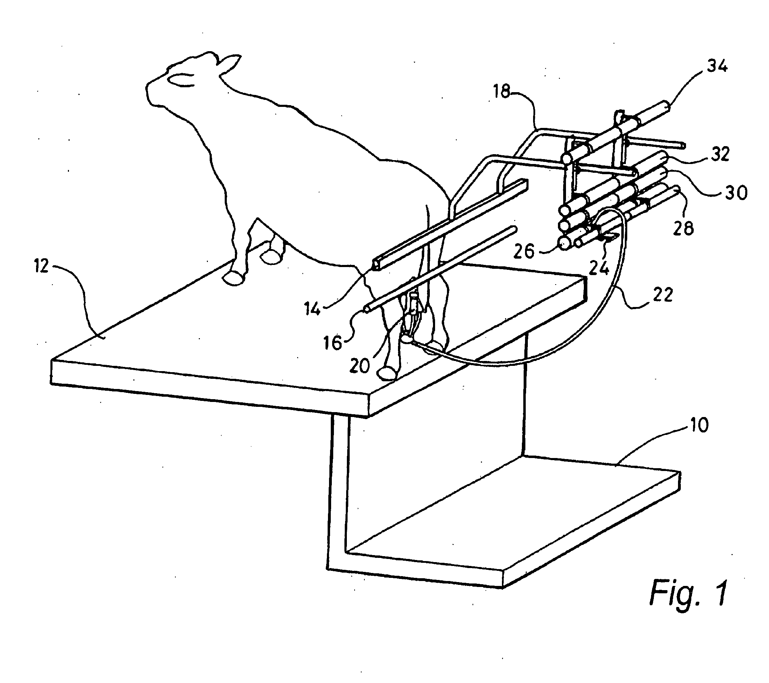

Fig 1 shows the rump rail of a conventional installation. This is a structural rail typically of tubular steel that is positioned along the rear of the stalls proximate to the rump of each cow, to hold the cow in place whilst it is being milked. Conventional high level pipelines 26, 28, 30, 32 and 34 carrying liquids, air or vacuum as identified above, are shown carried by a gantry including bridging arms such as 18.

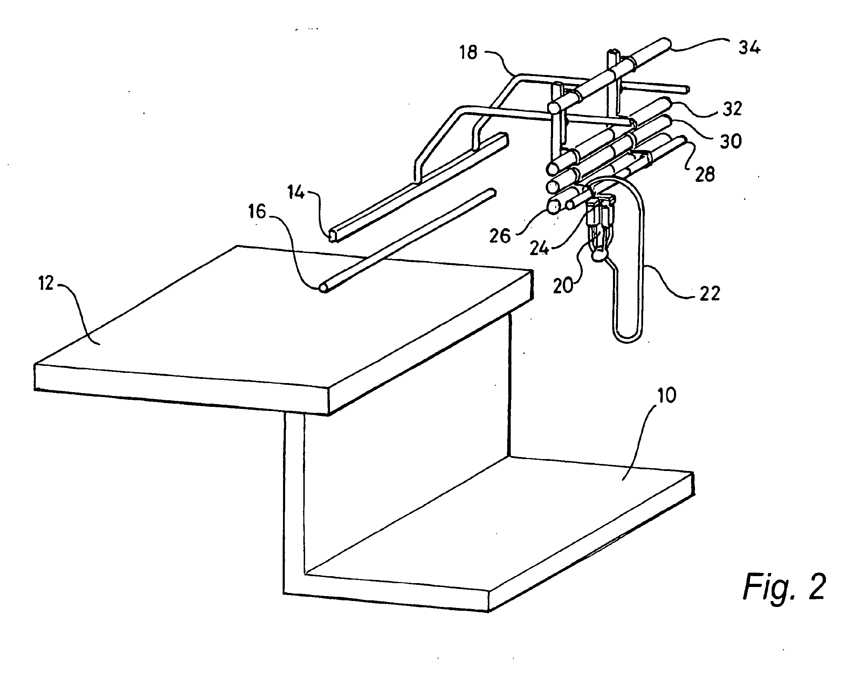

Fig 2 shows how when not in use the cluster unit 20 can be fitted below a washing station (jetter plate) 24 carried by a conventional wash line 28, for washing and sanitising the cluster and the pipework.

As shown in all the Figures a second rump rail 16 is positioned approximately 30cm below the rump rail 14 to assist in restraining the cow.

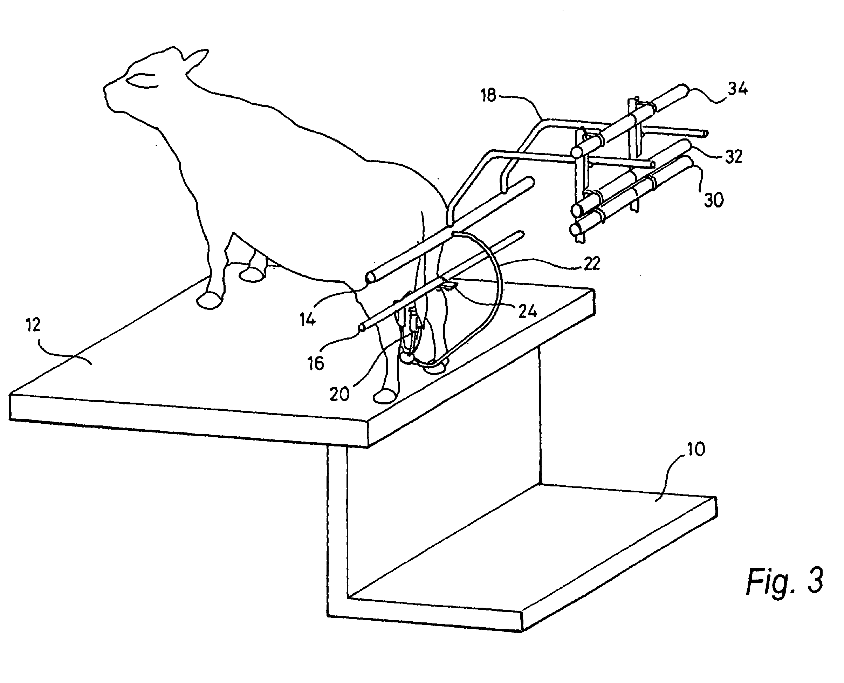

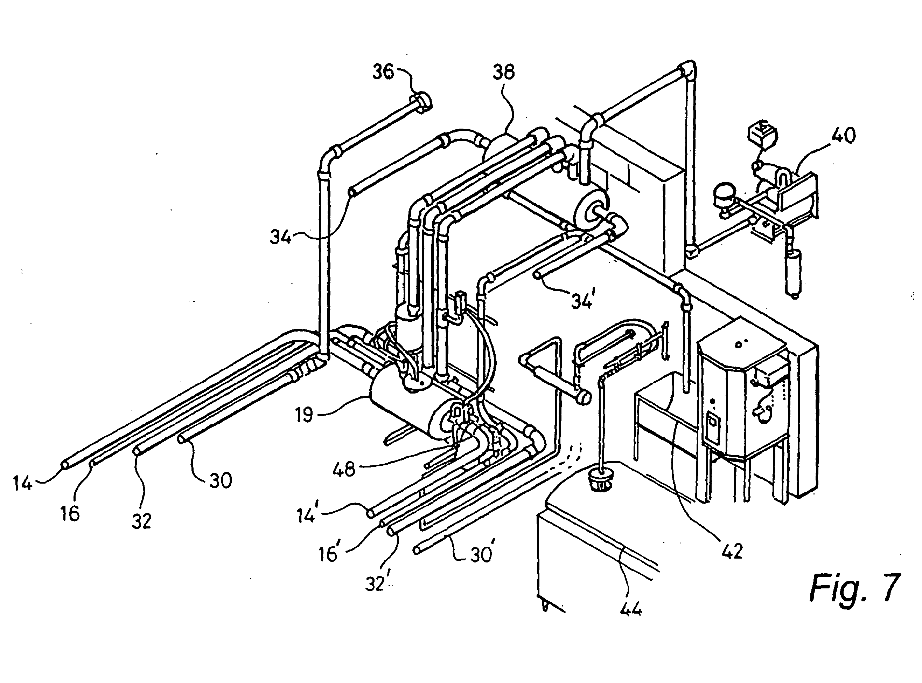

In Fig 3 and in accordance with the invention the hollow rump rail 14 serves to transport milk collected from the cow via the cluster unit 20 to a milk collecting vessel 46 (see Fig 7) by means of gravity, vacuum or air movement. The second rump rail 16 serves to carry wash solution to each of a plurality of wash stations each including a jetter plate 24 which are now carried by the rail 14 instead of the conventional wash line 28.

For cleaning purposes the rump rail wash line can feed water into the milk line via the wash station (jetter plate) and cluster unit, typically by the action of a vacuum at the milk collecting end of the milk line.

The bridge arm 18 is a structural item which extends between the rump rails and comprises part of the conventional gantry for supporting the conventional supply and collection lines. The item 18 can be dispensed with if the rump rails are free standing and all the supply and collection lines run in or are comprised by one or more of the rails.

The cluster unit 20 attaches to the cow and collects milk from the teats and feeds it to the milk line in the rail 14 through the flexible milk tube 22 under the effect of vacuum applied to a milk collecting vessel 46 (see Fig 7).

The wash station (jetter plate) is a means of distributing water or other cleaning or sanitising liquid evenly through the cluster unit under the action of vacuum applied to the milk collecting vessel 46 (Fig 7) during a wash cycle.

The milk line in the rail 14 transports milk collected by the cluster unit 20 to the milk collecting vessel 46 (Fig 7) again by means of the vacuum in the interior of 46 which is created by connecting the vessel 46 to a vacuum distribution tank 38, itself connected to a vacuum pump 40 (see Fig 7)..

The conventional clean air line 30 provides a supply of filtered air which, in turn, is supplied to pulsators. The pulsators (not shown in the Figures) are usually mounted on a conventional vacuum line 32, which since it supplies vacuum to the pulsators is therefore usually called a pulsation line. The clean air line filter 36 (see Fig 7) prevents particles of dust being sucked into the clean air line 30.

The pulsation line derives its vacuum from the vacuum distribution tank 38 to which it is connected (see Fig 7).

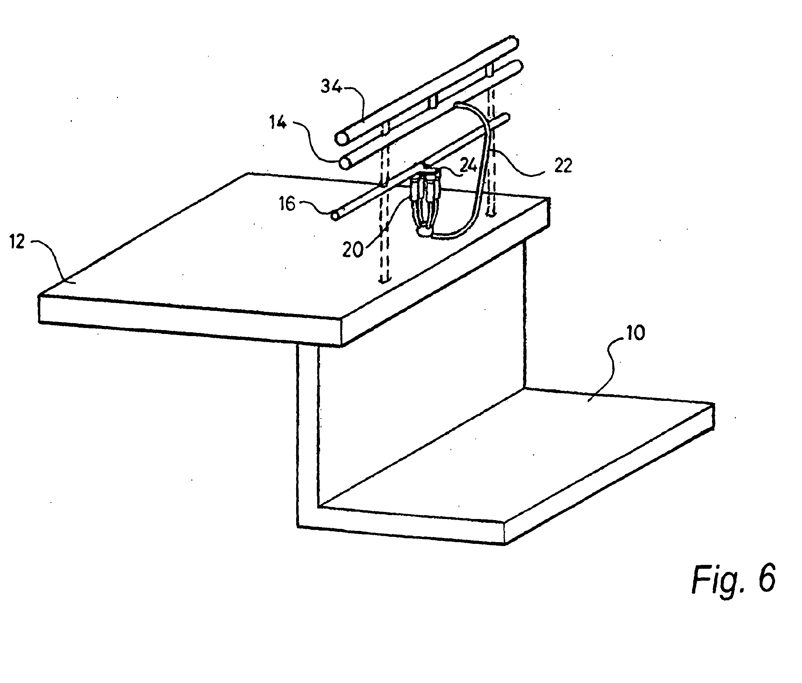

As shown in Fig 6 a third hollow rump rail 34 can serve as a vacuum line and this can form a pulsation line if the vacuum is pulsed or a pulsator is provided at each vacuum outlet along the rail.

The vacuum rump rail 34 may provide vacuum to ancillary equipment in the parlour more preferably a further hollow rump rail (not shown) may be provided for this purpose.

Likewise, although not shown, the conventional clean air line 30 may be replaced by another hollow rump rail (not shown) with appropriate outlets feeding the pulsators. The vacuum distribution tank 38 (see Fig 7) is a means of distributing vacuum to different vacuum lines.

The vacuum pump 40 (Fig 7) removes air from the vacuum distribution tank so lowering the internal pressure which in turn creates a vacuum in the various lines connected thereto.

Typically the bulk milk storage tank 44 (Fig 7) not only stores but also cools the milk collected from the cows.

The milk collecting vessel 46 (see Fig 7) receives milk from the milk line and holds this before the milk is transferred to the bulk storage tank 44 by means of the milk pump 48 as shown in Fig 7.

The milk pump 48 is adapted to transfer liquid out of the collecting vessel whilst allowing vacuum to be maintained in the system.

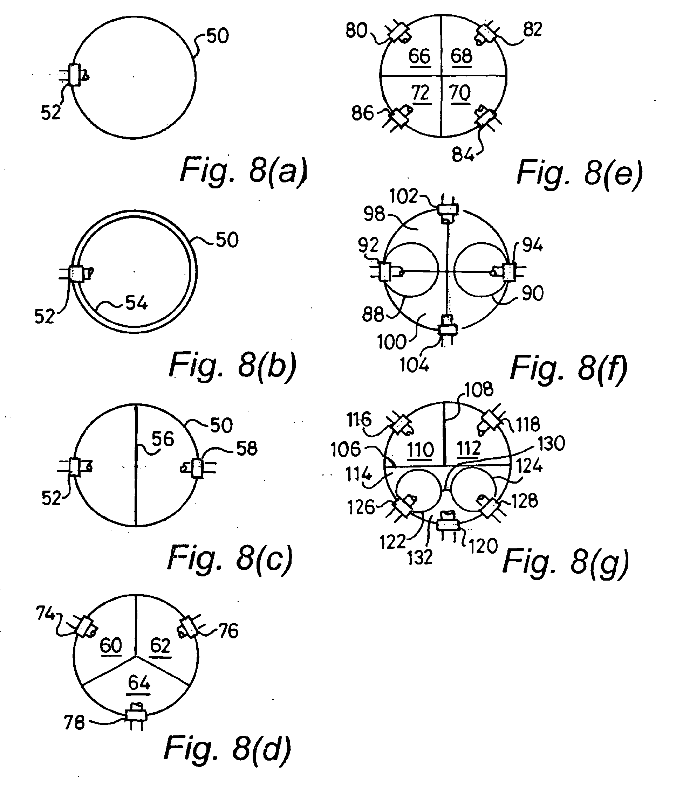

Fig 8a is a cross-section through a hollow tubular rump rail 50 showing a fluid connection to the interior of the rail at 52.

Fig 8b shows how the rail 50 can be lined internally with a non-corrosive material such as stainless steel or a food grade plastics liner 54.

Fig 8c show how a rail 50 can be divided internally by a wall 56 to provide two separate fluid paths with fluid connections 52, 58 as required.

Figs 8d and 8e show how the rail can be divided internally into three or four separate fluid paths 60, 62, 64 in Fig 8d and 66, 68, 70 and 72 in Fig 8e. Separate fluid connections 74, 76, 78 and 80, 82, 84 and 86 are shown connecting with the separate paths.

Fig 8f shows how the rail 50 can be used to house two separate pipes 88.90 to which fluid connectors communicate through the wall of the rail at 92 and 94.

The two pipes 88, 90 may be sealing joined along their length to the internal wall of the rail 50 and may be similarly sealingly joined to the centre of the rail (if their combined external diameters equal the internal diameter of the rail) or by a bridge 96. Where the two pipes 88, 90 (with or without a bridge 96) divide the rail internally into upper and lower regions 98, 100 these two regions can also serve as separate fluid paths and fluid connectors provided at points along the rail which communicate therewith, as descried by 102, 104.

Fig 8g shows another arrangement for dividing up the interior of the rail using dividing walls 106, 108 to create three separate fluid paths 110, 112 and 114 with connections thereto as denoted by 116, 118 and 120 and two separate pipes 122, 124 extend along the length of the rail in region 114 with connections to the interiors of the two pipes at 126, 128.

If the pipes 122, 124 are sealingly joined as by a bridge 130, the region 114 is separated from the region 132 and further fluid connectors (not shown) may be employed to communicate with 114, the connectors such as 120 now serving the region 132.

## Claims

1. A milking parlour comprising a plurality of stalls for restraining respective animals, the stalls comprising at least one continuous hollow rump rail, which extends across the rear of the stalls and serves as a conveyance for milk from the stalls when the parlour is in use.

2. A milking parlour as claimed in claim 1, wherein a plurality of separate hollow rump rails are provided across the rear of the stalls which in use also convey air under pressure and/or washing liquid to the stalls, and/or provide a vacuum line.

3. A milking parlour as claimed in claim 1 or 2, wherein the internal cross-section of the or some or all of each hollow rail is divided into at least two segments by means of at least one internal dividing wall running the length of the interior of the rail to provide two separate fluid paths along the one rail.

4. A milking parlour as claimed in claim 1 or 2, wherein at least two pipes extend along the length of the or some or all of each rail so as to allow one rail to accommodate at least two of the services.

5. A milking parlour as claimed in claim 1, wherein first connection means is provided between one end of at least one rump rail to a source of washing and/or sanitising liquid such that the liquid can be pumped into the hollow interior of the rail, and wash jetting means is provided at a plurality of spaced apart positions along the length of the rail, each convenient for at least one of the stalls, with a fluid connection between the hollow interior of the rail and the wash jetting means, whereby washing/sanitising liquid can be delivered thereto as required for washing and/or sanitising milking apparatus attached thereto.

6. A milking parlour as claimed in claim 1, wherein connection means is provided between one end of at least one rump rail and a milk collecting vessel which itself is connected to a vacuum source, and fluid connections are provided at a plurality of spaced apart positions along the length of the said rail, each convenient for at least one of the stalls, to which in use a flexible pipe leading to a milking machine cluster is connected, whereby milk withdrawn from the teats of an animal to which the cluster has been attached can be conveyed along the hollow interior of the rail for collection in the milk collecting vessel at the said one end of the said rail.

7. A milking parlour as claimed in claim 1, wherein connection means is provided between one end of at least one rump rail and a source of vacuum to form a vacuum line, and a vacuum connection is provided at at least one position therealong convenient for at least one of the milking stalls or a defined region within the parlour, to which in use a pipe is connected for connecting the vacuum line to an item of equipment such as a milking machine cluster within, or associated with, the milking parlour or one or more of the milking stalls therein.

8. A milking parlour as claimed in claim 7, wherein the vacuum source is operated in a manner to create a pulsating vacuum in the line.

9. A milking parlour as claimed in claim 7, wherein a pulsator device is incorporated in or at the or each vacuum connection, or in or at some of a plurality of vacuum connections located at spaced apart points along the vacuum line rail, or is incorporated in a pipe leading from a vacuum connection to the item of equipment connected to the line, or is incorporated into the item of equipment connected to the line.

10. A milking parlour as claimed in claim 1, wherein at least one rump rail is connected at one end to a source of clean filtered air, and air outlet connections are provided at appropriate points along the rail, to allow clean air to be drawn off as required.

## Patentansprüche

1. Ein Melkstand mit mehreren Einzelständen zum Umschließen der jeweiligen Tiere mit mindestens einer durchgehenden hohlen Steißschiene, die an der Rückseite der Einzelstände entlangläuft und bei in Betrieb befindlichen Melkstand zum Ableiten der Milch von den Einzelständen dient.

2. Ein Melkstand wie in Anspruch 1 beansprucht, wobei mehrere getrennte hohle Steißschienen entlang der Rückseite der Einzelstände vorgesehen sind, die im Betrieb auch Druckluft und/oder Waschflüssigkeit den Einzelständen zuführen und/oder eine Vakuumleitung darstellen.

3. Ein Melkstand wie in Anspruch 1 oder 2 beansprucht, wobei der Innenquerschnitt von einigen oder sämtlichen hohlen Schienen in mindestens zwei Segmente unterteilt ist mittels mindenstens einer entlang der Länge des Innenraumes der Schiene verlaufenden inneren Trennwand zum Ausbilden von zwei getrennten Arbeitsmittelwegen entlang der einen Schiene.

4. Ein Melkstand wie in Anspruch 1 oder 2 beansprucht, wobei mindestens zwei Rohre entlang der Länge der Schiene oder einiger oder sämtlicher Schienen verlaufen, um zu ermöglichen, dass eine Schiene mindestens zwei Aufgaben übernimmt.

5. Ein Melkstand wie in Anspruch 1 beansprucht, wobei ein erstes Verbindungsmittel zwischen einem Ende von mindestens einer Steißschiene und einer Quelle einer Wasch- und/oder Hygenieflüssigkeit vorgesehen ist, so dass die Flüssigkeit in den hohlen Innenraum der Scheine gepumpt werden kann, und Waschdüsenmittel entlang der Länge der Schiene an mehreren auseinanderliegenden Stellen vorgesehen sind, jedes zweckmäßig für mindestens einen der Einzelstände, mit einer Arbeitsmittelverbindung zwischen dem hohlen Innenraum der Schiene und den Waschdüsenmitteln, wodurch die Wasch-/ Hygieneflüssigkeit diesen nach Bedarf zur Wasch- und/oder Sanitärbehandlung einer daran angeschlossenen Melkeinrichtung zugeführt werden kann.

6. Ein Melkstand wie in Anspruch 1 beansprucht, wobei ein Verbindungsmittel zwischen einem Ende mindestens einer Steißschiene und einem selbst an eine Vakuumquelle angeschlossenem Milchsammelgefäß vorgesehen ist, und Arbeitsmittelverbindungen entlang der Länge dieser Schiene an mehreren auseinanderliegenden Stellen vorgesehen sind, jede zweckmäßig für mindestens einen der Einzelstände, an den im Betrieb eine zu einer Melkmaschinengruppe führende flexible Leitung angeschlossen ist, wodurch die den Zitzen eines Tieres, an das die Gruppe angeschlossen ist, entnommene Milch entlang des hohlen Innenraumes der Schiene zum Sammeln in dem Milchsammelgefäß an dem einen Ende der Schiene geleitet werden kann.

7. Ein Melkstand wie in Anspruch 1 beansprucht, wobei ein Verbindungsmittel zwischen einem Ende mindestens einer Steißschiene und einer Vakuumquelle zum Ausbilden einer Vakuumleitung angeschlossen ist, und eine Vakuumverbindung an mindestens einer Stelle entlang dieser zweckmäßig für mindestens einen der Melkeinzelstände oder einem festgelegten Gebiet in dem Stand vorgehen ist, an den im Betrieb eine Leitung zum Anschließen der Vakuumquelle an ein Teil der Ausrüstung, wie einer in diesem vorgesehenen Melkmaschinengruppe, oder zusammenwirkend mit dem Melkstand oder einem oder mehreren darin vorgesehener Einzelstände, angeschlossen ist

8. Ein Melkstand wie in Anspruch 7 beansprucht, wobei die Vakuumquelle in einer Weise zum Erzeugen eines in der Leitung pulsierenden Vakuums betrieben wird.

9. Ein Melkstand wie in Anspruch 7 beansprucht, wobei eine Pulsatorvorrichtung in oder an der oder jeder Vakuumverbindung eingeschlossen ist, oder in oder an einigen der vielen Vakuumverbindungen, die entlang der Vakuumleitungsschiene an auseinanderliegenden Punkten angeordnet sind, oder in einer von einer Vakuumverbindung zu einem Teil der Ausrüstung führenden Leitung eingeschlossen ist, wobei das Teil an die Leitung angeschlossen ist, oder in dem an die Leitung angeschlossenem Teil der Ausrüstung eingeschlossen ist.

10. Ein Melkstand wie in Anspruch 1 beansprucht, wobei mindestens eine Steißschiene an einem Ende an eine Quelle reiner gefilterter Luft angeschlossen ist und Luftauslaßverbindungen an geeigneten Punkten entlang der Schiene zum Ermöglichen des Abziehens von reiner Luft bei Bedarf vorgesehen sind.

## Revendications

1. Salle de traite comprenant une pluralité de stalles pour enfermer les animaux particuliers, les stalles comprenant au moins un rail arrière creux continu qui s'étend en travers de l'arrière des stalles et sert à transporter le lait depuis les stalles lorsque la salle de traite est utilisée.

2. Salle de traite selon la revendication 1, dans laquelle une pluralité de rails arrière creux séparés est prévue en travers de l'arrière des stalles, lesquels, pendant l'utilisation, transportent aussi de l'air sous pression et/ou du liquide de lavage vers les stalles et/ou fournissent une ligne de vide.

3. Salle de traite selon la revendication 1 ou 2, dans laquelle la section transversale interne du rail ou de certains des rails ou de tous les rails creux est divisée en au moins deux segments au moyen d'au moins une paroi de séparation interne s'étendant sur la longueur de l'intérieur du rail pour fournir deux chemins de fluide séparés le long du même rail.

4. Salle de traite selon la revendication 1 ou 2, dans laquelle au moins deux tuyaux s'étendent le long de la longueur du rail ou de certains des rails ou de tous les rails de manière à permettre à un rail de recevoir au moins deux des services.

5. Salle de traite selon la revendication 1, dans laquelle un premier moyen de connexion est prévu entre une extrémité d'au moins un rail arrière et une source de liquide de lavage et/ou de désinfection, de telle sorte que le liquide puisse être pompé dans l'intérieur creux du rail, et un moyen de lavage par jet étant prévu en une pluralité de positions espacées le long de la longueur du rail, chacune étant pratique pour au moins l'une des stalles, avec une connexion fluidique entre l'intérieur creux du rail et le moyen de lavage par jet, le liquide de lavage/désinfection pouvant être acheminé à celui-ci selon les besoins pour laver et/ou désinfecter l'appareil de traite qui lui est attaché.

6. Salle de traite selon la revendication 1, dans laquelle un moyen de connexion est prévu entre une extrémité d'au moins un rail arrière et un récipient de collecte du lait qui lui-même est connecté à une source de vide, et des connexions fluidiques sont prévues en une pluralité de positions espacées le long de la longueur dudit rail, chacune étant pratique pour au moins l'une des stalles, auxquelles est connecté, pendant l'utilisation, un tuyau flexible conduisant à un faisceau trayeur de machines de traite, le lait extrait du pis d'un animal auquel le faisceau trayeur a été attaché pouvant être transporté le long de l'intérieur creux du rail afin d'être recueilli dans le récipient de collecte du lait à ladite extrémité dudit rail.

7. Salle de traite selon la revendication 1, dans laquelle un moyen de connexion est prévu entre une extrémité d'au moins un rail arrière et une source de vide pour former une ligne de vide, et une connexion de vide est prévue au niveau d'au moins une position le long de celle-ci, qui est pratique pour au moins l'une des stalles de traite ou pour une région définie dans la salle de traite, à laquelle, pendant l'utilisation, est connecté un tuyau pour connecter la ligne de vide à un élément d'équipement tel qu'un faisceau trayeur d'une machine de traite dans ou associé à la salle de traite ou à une ou plusieurs des stalles de traite dans la salle.

8. Salle de traite selon la revendication 7, dans laquelle la source de vide est utilisée de manière à créer un vide pulsé dans la ligne.

9. Salle de traite selon la revendication 7, dans laquelle un dispositif pulseur est incorporé dans ou au niveau de la ou de chaque connexion de vide, ou dans ou au niveau de certaines d'une pluralité de connexions de vide situées en des points espacés le long du rail de la ligne de vide, ou est incorporé dans un tuyau conduisant d'une connexion de vide à l'élément d'équipement connecté à la ligne, ou est incorporé dans l'élément d'équipement connecté à la ligne.

10. Salle de traite selon la revendication 1, dans laquelle au moins un rail arrière est connecté à une extrémité à une source d'air filtré propre, et des connexions de sortie d'air sont prévues en des points appropriés le long du rail, pour permettre d'extraire de l'air propre si nécessaire.
